# EUROPEAN PATENT SPECIFICATION

(11) **EP 3 712 051 B1**
(45) Date of publication and mention of the grant of the patent: **24.07.2024**
(21) Application number: 19786261.8
(22) Date of filing: 06.05.2019
(51) Int. Cl.: B62K 15/00, B62K 21/18

(54) **BICYCLE FOLDING STRUCTURE AND BICYCLE FOLDING METHOD**
FAHRRADFALTSTRUKTUR UND FAHRRADFALTVERFAHREN
STRUCTURE DE PLIAGE DE BICYCLETTE ET PROCÉDÉ DE PLIAGE DE BICYCLETTE

(30) Priority: 15.10.2018 CN 201811194723
(43) Date of publication of application: 23.09.2020
(73) Proprietor: CHENG, Pao-Hsien, Tainan City, Taiwan (TW); CHENG, Chun-Shuo, Tainan City, Taiwan (TW)
(72) Inventor: CHENG, Pao-Hsien, Tainan City, Taiwan (TW); CHENG, Chun-Shuo, Tainan City, Taiwan (TW)
(74) Representative: Lang, Christian
(86) International application number: PCT/CN2019/085659
(87) International publication number: WO 2020/077982

(56) References cited:
- EP-A1- 2 711 279
- CN-U- 203 698 545
- KR-A- 20120 027 917
- US-A1- 2020 115 000

## Description

### RELATED APPLICATION

This application claims the benefits from Chinese Patent Application No. 201811194723.4, titled as "FOLDABLE BICYCLE AND METHOD FOR FOLDING THE SAME".

### Field of the Invention

The present invention relates to a foldable bicycle and a method for folding the same which has a pair of folding joints for rotating obliquely relative to each other so as to achieve efficacy of reducing volume by folding a front wheel and a rear wheel along an oblique junction to the corresponding side-by-side position.

### Description of Related Art

The Taiwan Patent Publication No. TW I385101 (B), issued on 11th Feb. 2013, has disclosed a folding bicycle frame and a folding bicycle. The folding technique includes folding the front frame towards the rear frame by the first pivot axis and rotating the rear-wheel support assembly by the second pivot axis relative to the rear frame to adjust the relative position of the rear-wheel support assembly and the front frame. That is to adjust the relative position of the rear wheel and the front wheel to reduce the volume of the bicycle for easily storing. However, the structure cannot be pushed to move after its frames are folded completely. If the structure needs to be moved, the entire frames must be lifted, which is quite inconvenient to use.

The China Patent Publication No. CN 104843123 (B), issued on 6th July. 2018, has disclosed a V-shaped type of folding bicycle. The fork assembly is interlocked with the upper end of the rear frame component by the shaft, and the shaft is provided with the folding mechanism to lock the fork assembly and the rear frame assembly or to perform relative rotation on the shaft. Although the abovementioned bicycle frame has two folding modes, the two folding modes are not continuous and only one of the folding modes can be selected at a time, so the operation is complicated.

The Taiwan Patent Publication No. M399082 (U), issued on 1st Mar. 2011, has disclosed a folding bicycle frame. It comprises a rear tripod rotating shaft, a front frame disposed on the rear tripod rotating shaft, and a head. The rear tripod rotating shaft has a rear tripod and a rotating shaft connected to the front end of the rear tripod. The front frame has a pivot tube for rotating in the rotating shaft so that the front frame can be rotated relative to the rear tripod. The head has a positioning device which is disposed at the top of the front end of the front frame, so the rear tripod and the front frame can be folded together. However, the front wheel and the rear wheel are not parallel to each other or arranged side by side in the folding state. Furthermore, there is an included angle between the front wheel and the rear wheel, so the bicycle cannot be pushed to move after it is completely folded. If the bicycle needs to be moved, the entire frames must be lifted, which is quite inconvenient to use.

With respect to the conventional technology, further reference is made to document CN 203 698 545 U, which discloses a movable joint used for a folding frame, such as a folding frame of a foldable bicycle, said movable joint including a first clutch block, a second clutch block, a pull rod and a handle, the first clutch block and the second clutch block being matched by tooth surfaces, the pull rod penetrating the two clutch blocks, wherein one end of the pull rod is connected with a nut and the other end thereof is provided with a cross pin. The end of the handle is provided with an eccentric cam, which is connected with the cross pin. By turning up the handle, a certain moving space is obtained between the first clutch block and the second clutch block along the direction of the pull rod, wherein under the action of a compression spring, the first clutch block and the second clutch block are stretched apart, so that the tooth surfaces of the clutch blocks are no longer engaged. Thus, the first clutch block and the second clutch block can both rotate around the pull rod, so that a relative position of the first connecting rod and second connecting rod can be adjusted to the desired angle. This document discloses the features of the preamble of claim 1.

Document EP 2 711 279 A1 discloses another hinge structure used in a foldable bicycle, which comprises a front hinge member, a center hinge member and a rear hinge member, a hinge shaft centrally provided at the hinge structure, a front rim, a center rim and a rear rim and rolling members. A first end of the hinge shaft is fixedly mounted to the front hinge member, an intermediate portion of the hinge shaft extends through the center hinge member and the other end of the hinge shaft protrudes from the rear hinge member and is coupled to an operating lever. The user can pivot the operating lever about the hinge shaft resulting in release of locking between the rear hinge member and the center hinge member as well as release of locking between the center hinge member and the front hinge member for allowing the user to fold the bicycle.

### SUMMARY OF THE INVENTION

In view of the above-mentioned problems, the object of the present invention is to provide a foldable bicycle which can be easily carried and stored with a reduced volume.

Disclosed herein is a foldable bicycle. It comprises a main frame having a first connecting rod and a second connecting rod, a first folding joint between the first connecting rod and the second connecting rod, a front wheel rack connected to a front end of the first connecting rod, a front wheel connected to the front wheel rack, and a rear wheel connected to a rear end of the second connecting rod.

The first folding joint is provided with a first outer shell connected to a rear end of the first connecting rod, a second outer shell connected to a front end of the second connecting rod for further connecting the first outer shell, an engaging unit accommodated in a space defined by the first outer shell and the second outer shell being joined together, at least one elastic member disposed between the engaging unit and the second outer shell, a press button having a pushing lever for inserting from an outside of the first outer shell to an interior of the first outer shell to contact the engaging unit, and a cam locking member for positioning the first outer shell, the engaging unit and the second outer shell all coaxial to another in a first axial direction and for controlling tightness between the first outer shell and the second outer shell. The first outer shell is formed by a first lateral wall and a first annular wall surrounding a periphery of the first lateral wall and having a first height and a second height. The second outer shell is formed by a second lateral wall and a second annular wall surrounding a periphery of the second lateral wall and having a first height and a second height. The first height of the first annular wall correspondingly connects with the second height of the second annular wall, and the second height of the first annular wall correspondingly connects with the first height of the second annular wall, so as further to form an oblique junction between the first and second annular walls.

The front wheel is arranged in a second axial direction parallel to an axis of the front wheel, and the rear wheel is arranged in the second axial direction parallel to an axis of the rear wheel. The second axial direction is obliquely oriented relative to the first axial direction at an included angle.

According to an embodiment of the present invention, an external surface of the first outer shell is provided with a capacity tank for accommodating the press button and a perforation disposed in the capacity tank for insertion of the pushing lever of the press button.

According to an embodiment of the present invention, a second folding joint is provided on a top end of the front wheel rack and a handlebar stem is further connected with the second folding joint, so the handlebar stem is bent downwardly to lean against a lateral side of the front wheel rack as the second folding joint stays in an unlocking state.

A method for folding a foldable bicycle as described above, comprising the steps of: unlocking a first folding joint fitted on a main frame between a front wheel and a rear wheel; rotating the first folding joint in a first axial direction to form an included angle between the first axial direction and a second axial direction obliquely oriented relative to the first axial direction, wherein the second axial direction is parallel to axes of the front and rear wheels; and folding the main frame by the first folding joint to make the front and rear wheels parallel to each other.

According to an embodiment of the present invention, it further comprises the step of downwardly bending a handlebar stem about an axis of a folding shaft part of a second folding joint by unlocking the second folding joint fitted between a front wheel rack and the handlebar stem, wherein the handlebar stem is connected with the second folding joint pivoted on a top end of the front wheel rack.

According to an embodiment of the present invention, further comprises the step of rotating the front wheel rack about an axis of a connection between a front end of the main frame and the front wheel rack in a clockwise or counterclockwise direction to allow the front wheel rack directing forward to backward before the step of folding the main frame.

The engaging unit is disposed on the oblique junction to engage with the first outer shell and the second outer shell to lock the first folding joint. When the press button is pressed, its pushing lever pushes the engaging unit to move towards the second outer shell until it is detached from the first outer shell. After the first folding joint is unlocked, the first folding joint can be rotated in the first axial direction as the axis for folding. During the folding process, the first outer shell and the second outer shell are rotated along the oblique junction, and the main frame is folded until the front wheel and the rear wheel are arranged side by side.

The design of the first folding joint, the second folding joint, and the oblique junction allows the front wheel and the rear wheel that are originally arranged on a same line to stagger from each other during the folding process. Therefore, the front wheel and the rear wheel can be arranged parallel to each other after the main frame is completely folded, which is convenient for a user to take the bicycle.

Furthermore, the front wheel disposed on the front wheel rack can be arranged parallel to the rear wheel by not-turning or turning the handlebar stem to bring the front wheel rack to rotate backwards.

### BRIEF DESCRIPTION OF THE DRAWINGS

FIG. 1 is a lateral view showing a foldable bicycle according to the present invention;
FIG. 2 is an explosion diagram showing a foldable bicycle according to the present invention;
FIG. 3 is a top view showing the explosion diagram of the foldable bicycle according to the present invention;
FIG. 4 is a top view showing a foldable bicycle in assembly according to the present invention;
FIG. 5 is a top view showing a foldable bicycle in assembly according to the present invention;
FIG. 6 is a schematic diagram showing a state of folding a first folding joint according to the present invention;
FIG. 7 is a stereogram showing a handlebar stem, a second folding joint and a front wheel rack of a first embodiment for a foldable bicycle according to the present invention;
FIG. 8 is a stereogram showing a second folding joint according to the present invention;
FIG. 9 is a schematic diagram showing a state of folding a second folding joint according to the present invention;
FIG. 10 is a schematic diagram showing a complete folding of a foldable bicycle according to the present invention;
FIG. 11 is a lateral view showing the complete folding of the foldable bicycle according to the present invention;
FIG. 12 is a stereogram showing a handlebar stem, a second folding joint and a front wheel rack of a second embodiment for a foldable bicycle according to the present invention;
FIG. 13 is a stereogram showing the handlebar stem of the second embodiment for the foldable bicycle according to the present invention;
FIG. 14 is a lateral view showing the handlebar stem folded from the second folding joint of the second embodiment for the foldable bicycle according to the present invention;
FIG. 15 is a lateral view showing a complete folding of the handlebar stem of the second embodiment for the foldable bicycle according to the present invention.

### The reference numerals

1 main frame
11 first connecting rod
12 second connecting rod
2 first folding joint
21 first outer shell
211 first lateral wall
212 first annular wall
213 perforation
214 capacity tank
22 second outer shell
221 second lateral wall
222 second annular wall
23 engaging unit
24 elastic member
25 press button
251 pushing lever
26 cam locking member
3 front wheel rack
4 front wheel
5 rear wheel
6 second folding joint
61 upper seat
62 lower seat
63 unlock control element
64 folding shaft part
7 handlebar stem
S1 oblique junction
L1 second axial direction
L2 first axial direction
*θ* included angle

### DETAILED DESCRIPTION OF THE PREFERRED EMBODIMENT

Hereinafter, an exemplary embodiment of the present invention will be described in detail with reference to the accompanying drawings.

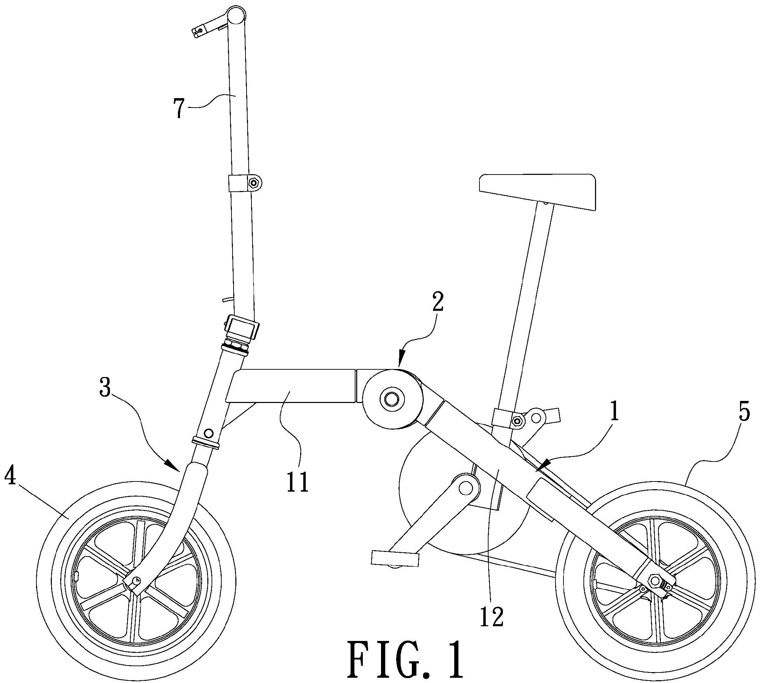

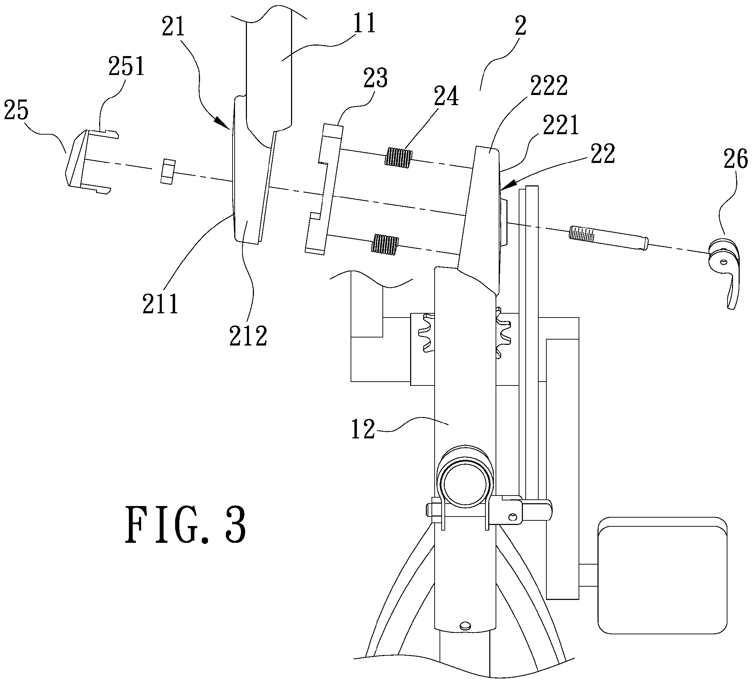

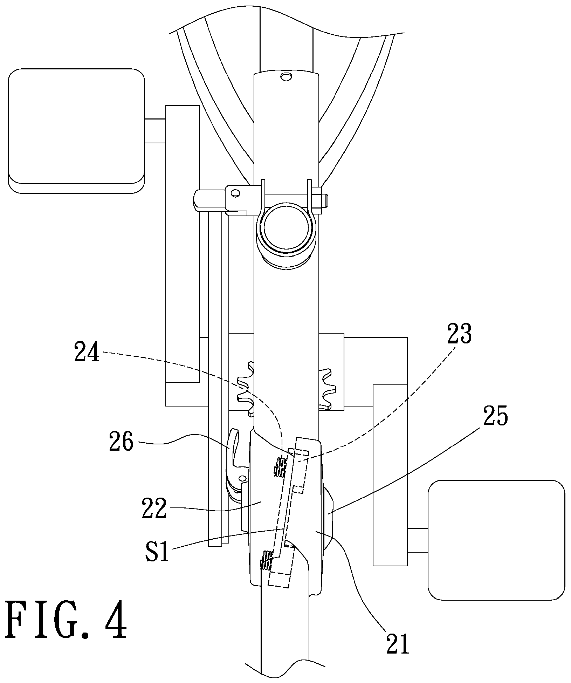

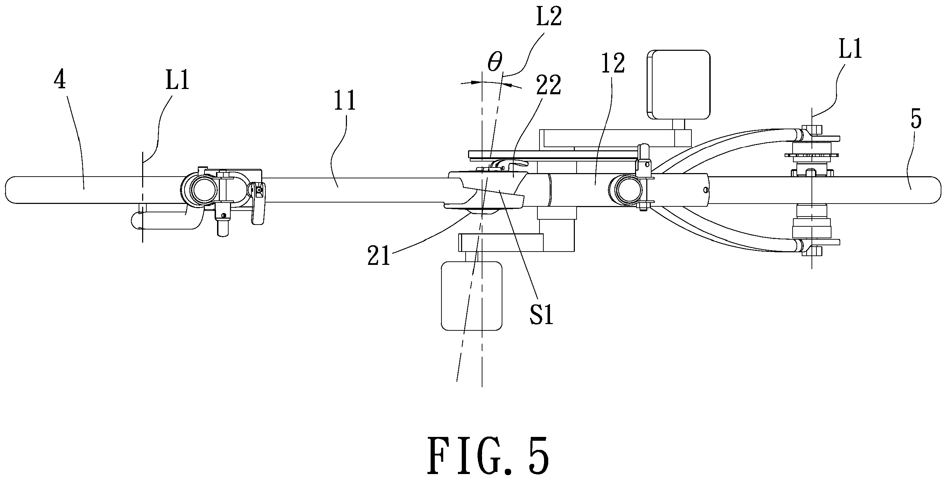

As showed in FIG. 1 to FIG. 6, a foldable bicycle according to the present invention is disclosed herein. It mainly comprises a main frame (1), a first folding joint (2), a front wheel rack (3), a front wheel (4) and a rear wheel (5).

The main frame (1) comprises a first connecting rod (11) and a second connecting rod (12). The first folding joint (2) is disposed between the first connecting rod (11) and the second connecting rod (12). The front wheel rack (3) is connected to a front end of the first connecting rod (11). The front wheel (4) is connected to the front wheel rack (3) and arranged in a second axial direction (L1) parallel to an axis of the front wheel (4). The rear wheel (5) is connected to a rear end of the second connecting rod (12) and arranged in the second axial direction (L1) parallel to an axis of the rear wheel (5).

The first folding joint (2) comprises a first outer shell (21), a second outer shell (22), an engaging unit (23), at least one elastic member (24), a press button (25) and a cam locking member (26). The first outer shell (21) is connected to a rear end of the first connecting rod (11). The second outer shell (22) is connected to a front end of the second connecting rod (12) for further connecting the first outer shell (21). The the first outer shell (21) is formed by a first lateral wall (211) and a first annular wall (212) surrounding a periphery of the first lateral wall (211) and having a first height and a second height. The second outer shell (22) is formed by a second lateral wall (221) and a second annular wall (222) surrounding a periphery of the second lateral wall (221) and having a first height and a second height. The first height of the first annular wall (212) correspondingly connects with the second height of the second annular wall (222), and the second height of the first annular wall (212) correspondingly connects with the first height of the second annular wall (222), so as further to form an oblique junction (S1) between the first and second annular walls (212) (222).

The engaging unit (23) is accommodated in a space defined by the first outer shell (21) and the second outer shell (22) being joined together.

The at least one elastic member (24) is disposed between the engaging unit (23) and the second outer shell (22).

The press button (25) is disposed on an outside of the first outer shell (21) and provided with a pushing lever (251) for inserting from a perforation (213) on the outside of the first outer shell (21) to an interior of the first outer shell (21) to contact the engaging unit (23).

The cam locking member (26) positions the first outer shell (21), the engaging unit (23) and the second outer shell (22) all coaxial to another in a first axial direction (L2) and controls tightness between the first outer shell (21) and the second outer shell (22) by a long radius and a short radius of its cam.

The second axial direction (L1) is obliquely oriented relative to the first axial direction (L2) at an included angle (*θ*). The engaging unit (23) is disposed on the oblique junction (S1) to engage with the first outer shell (21) and the second outer shell (22).

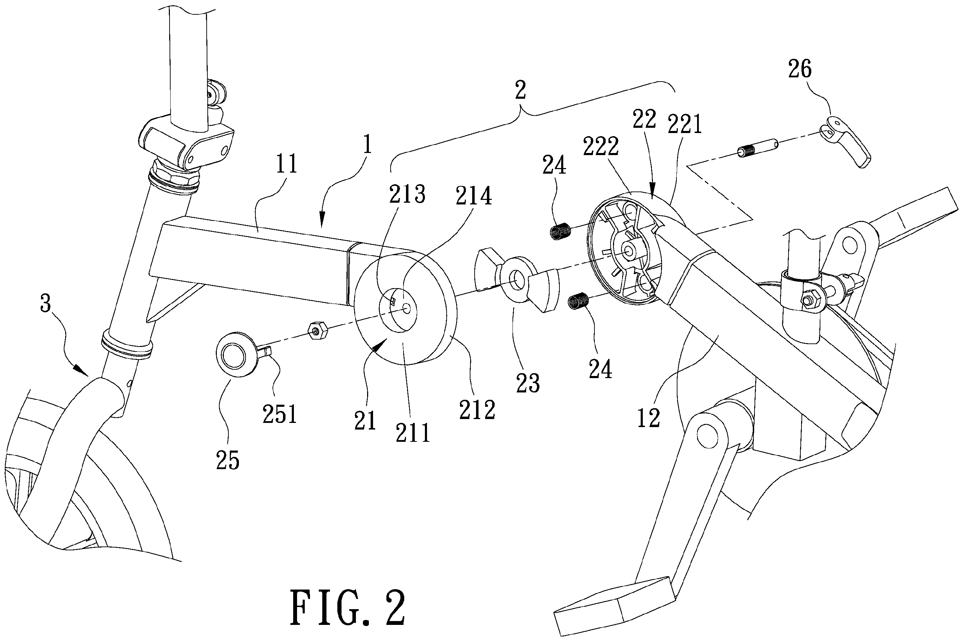

Referring to FIG. 2 to FIG. 5, as the foldable bicycle stays in an unfolding state, the cam locking member (26) contacts an external side of the second outer shell (22) by the long radius of its cam so that the first outer shell (21) is tightly assembled to the second outer shell (22). In such a case, the engaging unit (23) is elastically pushed against by the at least one elastic member (24) and located on the oblique junction (S1) between the first outer shell (21) and the second outer shell (22) to engage with the first outer shell (21) and the second outer shell (22). Accordingly, the first folding joint (2) stays in a locking state, and the foldable bicycle is fixedly expanded and cannot be folded.

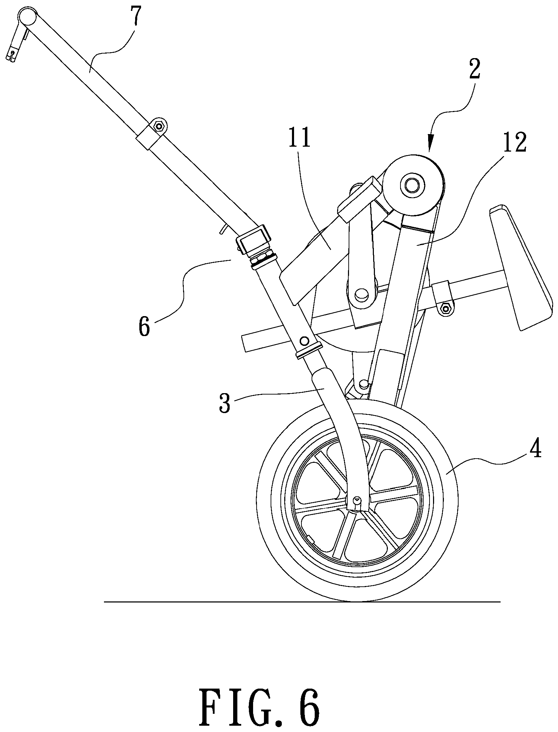

Referring to FIG. 2 to FIG. 5, for folding the main frame (1) of the foldable bicycle, the cam locking member (26) is firstly pulled so as to contact the external side of the second outer shell (22) by the short radius of its cam instead of the long radius, resulting in the first outer shell (21) loosening the second outer shell (22). Then, the press button (25) is pressed to drive its pushing lever (251) to push the engaging unit (23) to move towards the second outer shell (22) until the engaging unit (23) is completely accommodated in the second outer shell (22) and detached from the first outer shell (21). In such a case, the first folding joint (2) is unlocked, and the first folded joint (2) can be rotated in the first axial direction (L2) as the axis for folding. During the folding process, the first outer shell (21) and the second outer shell (22) are rotated along the oblique junction (S1), and the main frame (1) is folded until the front and rear wheels (4) (5) parallel to each other as shown in FIG. 6.

According to the abovementioned structure, the present invention also provides a method for folding the foldable bicycle. It comprises the steps of: unlocking the first folding joint (2) fitted on the main frame (1) between the front wheel (4) and the rear wheel (5); rotating the first folding joint (2) in the first axial direction (L2) to form the included angle (*θ*) between the first axial direction (L2) and the second axial direction (L1) obliquely oriented relative to the first axial direction (L2); and folding the main frame (1) by the first folding joint (2) to make the radial direction of the front and rear wheels (4) (5) not in the same plane and make the front and rear wheels (4) (5) parallel to each other. The second axial direction (L1) is parallel to axes of the front and rear wheels (4) (5). Preferably, the front and rear wheels (4) (5) are coaxial. In the folding state of the foldable bicycle, a handlebar stem (7) connected with a second folding joint (6) pivoted on a top end of the front wheel rack (3) can be used to push the folded bicycle to move as shown in FIG. 6.

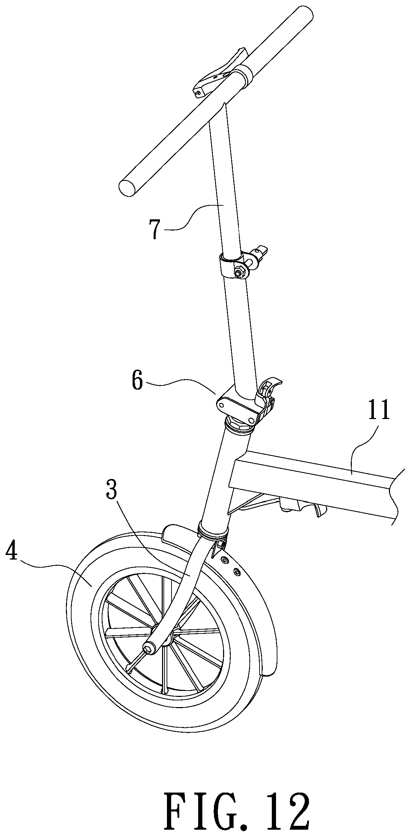

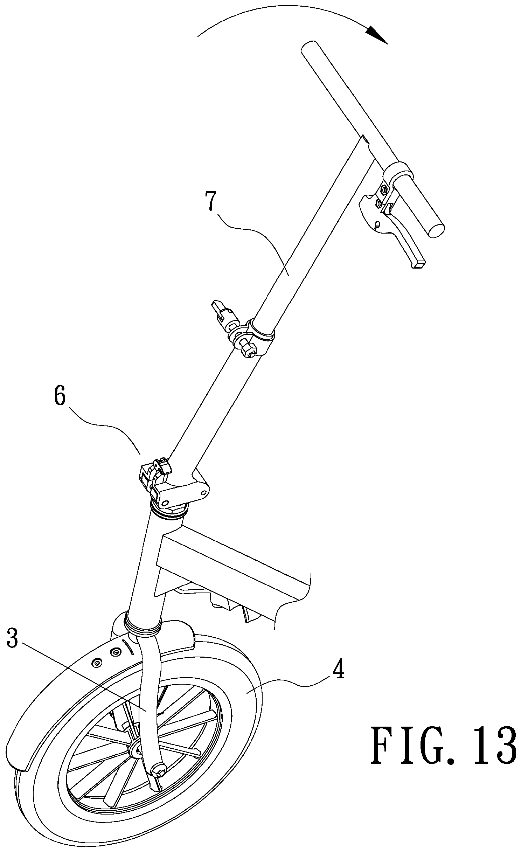

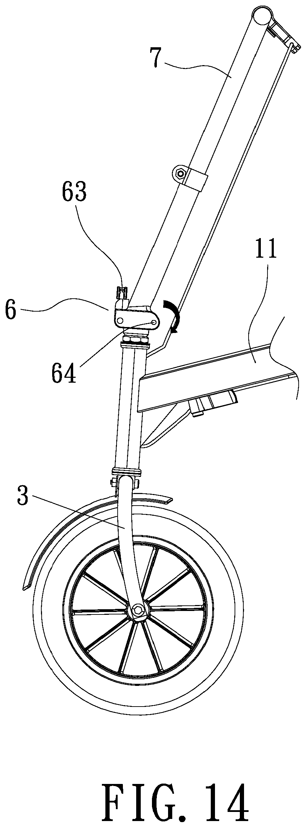

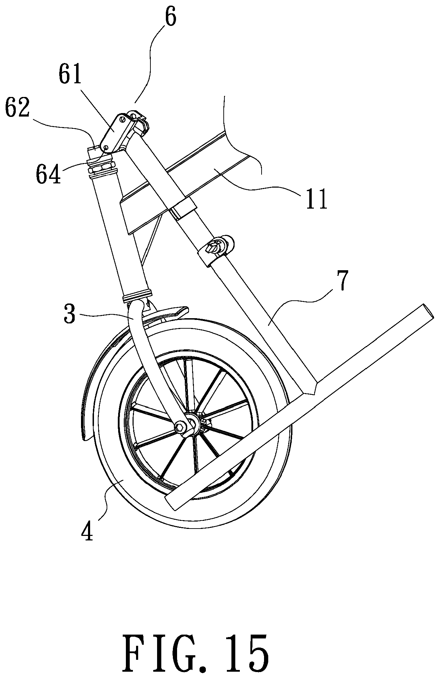

Referring to FIG. 12 to FIG. 15, before the step of folding the main frame (1), the front wheel rack (3) is rotated about an axis of a connection between a front end of the main frame (1) and the front wheel rack (3) in a clockwise or counterclockwise direction to allow the front wheel rack (3) directing forward to backward. In such folding state, the handlebar stem (7) connected with the second folding joint (6) pivoted on the top end of the front wheel rack (3) can be used to push the folded bicycle to move.

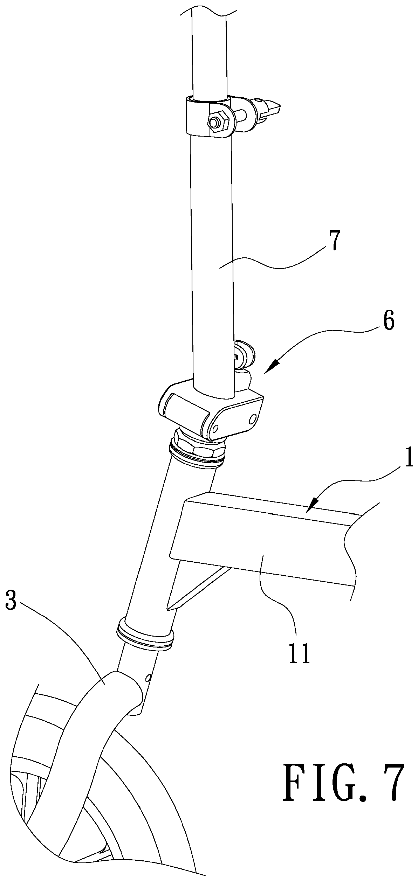

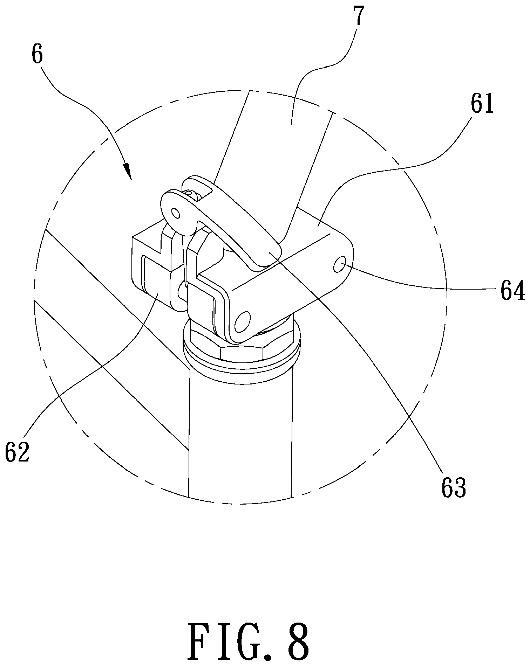

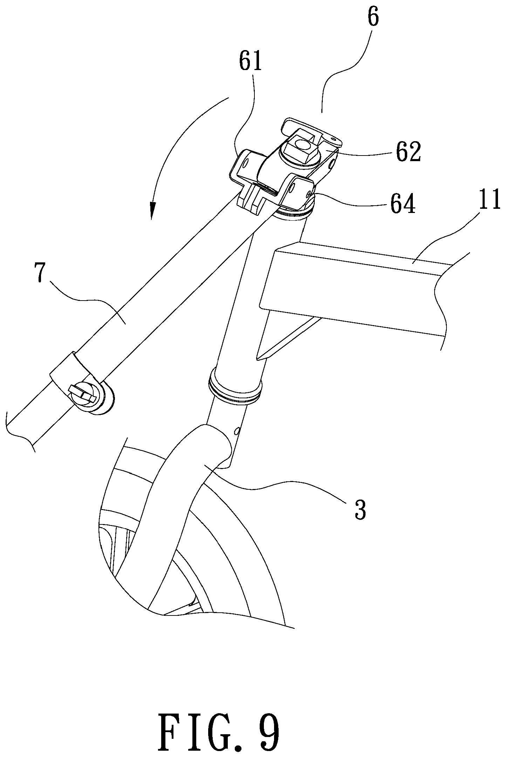

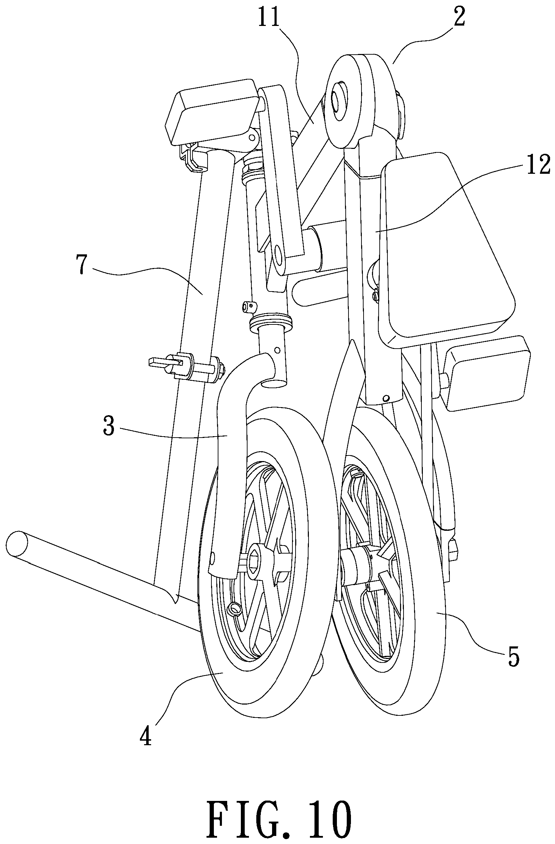

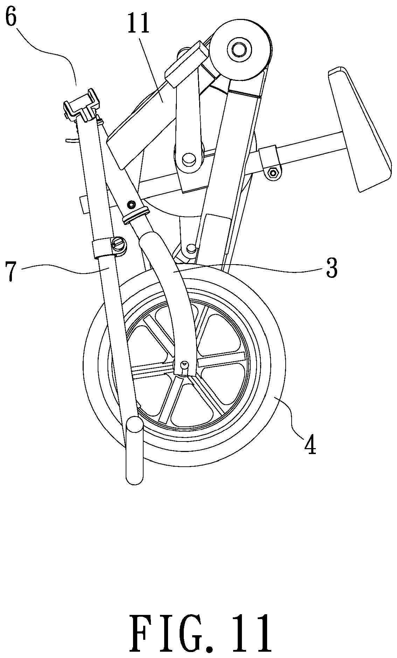

Referring to FIG. 7 and FIG. 8, the second folding joint (6) comprises a upper seat (61), a lower seat (62), a unlock control element (63) disposed on a first side of the upper seat (61), and a folding shaft part (64) disposed on second sides of the upper seat (61) and the lower seat (62). When the unlock control element (63) is locked on a first side of the lower seat (62) as shown in FIG. 1 and FIG. 7, the upper seat (61) and the lower seat (62) are joined together. In such a case, a user can control a forward direction of the front wheel (4) by controlling the handlebar stem (7). After the unlock control element (63) is unlocked, the handlebar stem (7) can be downwardly bent about an axis of the folding shaft part (64) of the second folding joint (6) as shown in FIG. 9 to FIG. 11.

For storing the foldable bicycle, the handlebar stem (7) is further folded as shown in FIG. 8 to FIG. 11 so as to reduce the volume and the occupied space. After the main frame (1) is folded, the handlebar stem (7) is further bent downwardly about the axis of the folding shaft part (64) of the second folding joint (6) by unlocking the second folding joint (6) fitted between the front wheel rack (3) and the handlebar stem (7) so as to lean against a lateral side of the front wheel rack (3).

Furthermore, an external surface of the first outer shell (21) is provided with a capacity tank (214) for accommodating the press button (25) and the perforation (213) disposed in the capacity tank (214) for insertion of the pushing lever (251) of the press button (25) as shown in FIG. 2.

## Claims

1. A foldable bicycle, comprising:
a main frame (1) having a first connecting rod (11) and a second connecting rod (12);
a first folding joint (2) between the first connecting rod (11) and the second connecting rod (12) and having a first outer shell (21) connected to a rear end of the first connecting rod (11), a second outer shell (22) connected to a front end of the second connecting rod (12) for further connecting the first outer shell (21), at least one elastic member (24) and a cam locking member (26), wherein the first outer shell (21) is formed by a first lateral wall (211) and a first annular wall (212) surrounding a periphery of the first lateral wall (211) and having a first height and a second height, and the second outer shell (22) is formed by a second lateral wall (221) and a second annular wall (222) surrounding a periphery of the second lateral wall (221) and having a first height and a second height, and wherein the first height of the first annular wall (212) correspondingly connects with the second height of the second annular wall (222), and the second height of the first annular wall (212) correspondingly connects with the first height of the second annular wall (222), so as further to form an oblique junction (S1) between the first and second annular walls (212, 222);
a front wheel rack (3) connected to a front end of the first connecting rod (11);
a front wheel (4) connected to the front wheel rack (3) and arranged in a second axial direction (L1) parallel to an axis of the front wheel (4);
a rear wheel (5) connected to a rear end of the second connecting rod (12) and arranged in the second axial direction (L1) parallel to an axis of the rear wheel (5), wherein the second axial direction (L1) is obliquely oriented relative to the first axial direction (L2) at an included angle (*θ*); wherein, after the first folding joint (2) is unlocked, the first folding joint (2) can be rotated in the first axial direction (L2) as the axis for folding; wherein, during the folding process, the first outer shell (21) and the second outer shell (22) are rotated along the oblique junction (S1), and the main frame (1) is folded until the front wheel (4) and the rear wheel (5) are arranged side by side;
**characterized in that**
the first folding joint (2) further includes an engaging unit (23) accommodated in a space defined by the first outer shell (21) and the second outer shell (22) being joined together, the at least one elastic member (24) being disposed between the engaging unit (23) and the second outer shell (22), a press button (25) having a pushing lever (251) for inserting from an outside of the first outer shell (21) to an interior of the first outer shell (21) to contact the engaging unit (23), and the cam locking member (26) being configured for positioning the first outer shell (21), the engaging unit (23) and the second outer shell (22) all coaxial to another in a first axial direction (L2) and for controlling tightness between the first outer shell (21) and the second outer shell (22);
wherein the engaging unit (23) is disposed on the oblique junction (S1) to engage with the first outer shell (21) and the second outer shell (22) to lock the first folding joint (2);
wherein, when the press button (25) is pressed, its pushing lever (251) pushes the engaging unit (23) to move towards the second outer shell (22) until it is detached from the first outer shell (21).

2. The foldable bicycle as claimed in claim 1, wherein an external surface of the first outer shell (21) is provided with a capacity tank (214) for accommodating the press button (25) and a perforation (213) disposed in the capacity tank (214) for insertion of the pushing lever (251) of the press button (25).

3. The foldable bicycle as claimed in claim 2, wherein a second folding joint (6) is provided on a top end of the front wheel rack (3) and a handlebar stem (7) is further connected with the second folding joint (6), so the handlebar stem (7) is bent downwardly to lean against a lateral side of the front wheel rack (3) as the second folding joint (6) stays in an unlocking state.

4. The foldable bicycle as claimed in claim 1, wherein a second folding joint (6) is provided on a top end of the front wheel rack (3) and a handlebar stem (7) is further connected with the second folding joint (6), so the handlebar stem (7) is bent downwardly to lean against a lateral side of the front wheel rack (3) as the second folding joint (6) stays in an unlocking state.

5. A method for folding a foldable bicycle as claimed in claim 1, comprising the steps of:
unlocking a first folding joint (2) fitted on a main frame (1) between a front wheel (4) and a rear wheel (5);
rotating the first folding joint (2) in a first axial direction (L2) to form an included angle (*θ*) between the first axial direction (L2) and a second axial direction (L1) obliquely oriented relative to the first axial direction (L2), wherein the second axial direction (L1) is parallel to axes of the front and rear wheels (4, 5); and
folding the main frame (1) by the first folding joint (2) to make the front and rear wheels (4, 5) parallel to each other.

6. The method for folding a foldable bicycle as claimed in claim 5, further comprising the step of downwardly bending a handlebar stem (7) about an axis of a folding shaft part (64) of a second folding joint (6) by unlocking the second folding joint (6) fitted between a front wheel rack (3) and the handlebar stem (7), wherein the handlebar stem (7) is connected with the second folding joint (6) pivoted on a top end of the front wheel rack (3).

7. The method for folding a foldable bicycle as claimed in claim 6, further comprising the step of rotating the front wheel rack (3) about an axis of a connection between a front end of the main frame (1) and the front wheel rack (3) in a clockwise or counterclockwise direction to allow the front wheel rack (3) directing forward to backward before the step of folding the main frame (1).

8. The method for folding a foldable bicycle as claimed in claim 5, further comprising the step of rotating the front wheel rack (3) about an axis of a connection between a front end of the main frame (1) and the front wheel rack (3) in a clockwise or counterclockwise direction to allow the front wheel rack (3) directing forward to backward before the step of folding the main frame (1).

## Patentansprüche

1. Klappbares Fahrrad, umfassend:
einen Hauptrahmen (1), der einen erste Verbindungsstange (11) und eine zweite Verbindungsstange (12) aufweist;
ein erstes Faltgelenk (2) zwischen der ersten Verbindungsstange (11) und der zweiten Verbindungsstange (12) und mit einer mit einem hinteren Ende der ersten Verbindungsstange (11) verbundenen ersten Außenhülle (21), einer mit einem vorderen Ende der zweiten Verbindungsstange (12) verbundenen zweiten Außenhülle (22) zur weiteren Verbindung mit der ersten Außenhülle (21), mindestens einem elastischen Element (24) und einem Nockenverriegelungselement (26), wobei die erste Außenhülle (21) durch eine erste Seitenwand (211) und eine erste ringförmige Wand (212) ausgebildet ist, die eine Peripherie der ersten Seitenwand (211) umgibt und eine erste Höhe und eine zweite Höhe hat, wobei die zweite Außenhülle (22) durch eine zweite Seitenwand (221) und eine zweite ringförmige Wand (222) ausgebildet ist, die eine Peripherie der zweiten Seitenwand (221) umgibt und eine erste Höhe und eine zweite Höhe hat, und wobei die erste Höhe der ersten ringförmigen Wand (212) korrespondierend mit der zweiten Höhe der zweiten ringförmigen Wand (222) verbunden ist, und die zweite Höhe der ersten ringförmigen Wand (212) korrespondierend mit der ersten Höhe der zweiten ringförmigen Wand (222) verbunden ist, um ferner eine schräge Verbindung (S1) zwischen den ersten und zweiten ringförmigen Wänden (212, 222) zu bilden;
einen Vorderradträger (3), der mit einem vorderen Ende der ersten Verbindungsstange (11) verbunden ist;
ein Vorderrad (4), das mit dem Vorderradträger (3) verbunden ist und in einer zweiten Axialrichtung (L1) parallel zu einer Achse des Vorderrads (4) angeordnet ist;
ein Hinterrad (5), das mit einem hinteren Ende der zweiten Verbindungsstange (12) verbunden ist und in der zweiten Axialrichtung (L1) parallel zu einer Achse des Hinterrads (5) angeordnet ist, wobei die zweite Axialrichtung (L1) in Bezug auf die erste Axialrichtung (L2) unter einem eingeschlossenen Winkel (*θ*) schräg ausgerichtet ist; wobei, nachdem das erste Faltgelenk (2) entsperrt wurde, das erste Faltgelenk (2) in der ersten Axialrichtung (L2) als Achse für das Falten gedreht werden kann; wobei während des Faltvorgangs die erste Außenhülle (21) und die zweite Außenhülle (22) entlang der schrägen Verbindung (S1) gedreht werden und der Hauptrahmen (1) zusammengeklappt wird bis das Vorderrad (4) und das Hinterrad (5) nebeneinander angeordnet sind;
**dadurch gekennzeichnet, dass**
das erste Faltgelenk (2) ferner eine Einrasteinheit (23) beinhaltet, die in einem Raum untergebracht ist, der durch die erste Außenhülle (21) und die zweite Außenhülle (22), die miteinander zusammengefügt sind, definiert ist, wobei das mindestens eine elastische Element (24) zwischen der Einrasteinheit (23) und der zweiten Außenhülle (22) angeordnet ist, und einen Druckknopf (25) mit einem Schubhebel (251) zum Einschieben von einer Außenseite der ersten Außenhülle (21) in einen Innenraum der ersten Außenhülle (21) zum Kontaktieren der Einrasteinheit (23), und wobei das Nockenverriegelungselement (26) konfiguriert ist, um die erste Außenhülle (21), die Einrasteinheit (23) und die zweite Außenhülle (22) alle koaxial zueinander in einer ersten Axialrichtung (L2) zu positionieren und zur Kontrolle der Festigkeit zwischen der ersten Außenhülle (21) und der zweiten Außenhülle (22);
wobei die Einrasteinheit (23) an der schrägen Verbindung (S1) angeordnet ist, um mit der ersten Außenhülle (21) und der zweiten Außenhülle (22) in Eingriff zu kommen, um das erste Faltgelenk (2) zu sperren;
wobei, wenn der Druckknopf (25) gedrückt wird, dessen Schubhebel (251) die Einrasteinheit (23) zur Bewegung in Richtung der zweiten Außenhülle (22) anschiebt bis sie von der ersten Außenhülle (21) gelöst ist.

2. Klappbares Fahrrad nach Anspruch 1, bei welchem eine Außenfläche der ersten Außenhülle (21) mit einem Volumenbehälter (214) zur Aufnahme des Druckknopfs (25) versehen ist und zum Einsetzen des Schubhebels (251) des Druckknopfs (25) ein Loch (213) in dem Volumenbehälter (214) vorgesehen ist.

3. Klappbares Fahrrad nach Anspruch 2, bei welchem ein zweites Faltgelenk (6) an einem oberen Ende des Vorderradträgers (3) vorgesehen ist und ferner ein Lenkervorbau (7) mit dem zweiten Faltgelenk (6) verbunden ist, sodass der Lenkervorbau (7) nach unten geknickt wird, um sich gegen eine Lateralseite des Vorderradträgers (3) zu lehnen, während das zweite Faltgelenk (6) in einem entriegelten Zustand bleibt.

4. Klappbares Fahrrad nach Anspruch 1, bei welchem ein zweites Faltgelenk (6) an einem oberen Ende des Vorderradträgers (3) vorgesehen ist und ferner ein Lenkervorbau (7) mit dem zweiten Faltgelenk (6) verbunden ist, sodass der Lenkervorbau (7) nach unten geknickt wird, um sich gegen eine Lateralseite des Vorderradträgers (3) zu lehnen, während das zweite Faltgelenk (6) in einem entriegelten Zustand bleibt.

5. Verfahren zum Falten eines klappbaren Fahrrads nach Anspruch 1, umfassend die Schritte:
Entsperren eines ersten Faltgelenks (2), das an einem Hauptrahmen (1) zwischen einem Vorderrad (4) und einem Hinterrad (5) montiert ist;
Drehen des ersten Faltgelenks (2) in einer ersten Axialrichtung (L2), um einen eingeschlossenen Winkel (*θ*) zwischen der ersten Axialrichtung (L2) und einer zweiten Axialrichtung (L1) zu bilden, die in Bezug auf die erste Axialrichtung (L2) schräg ausgerichtet ist, wobei die zweite Axialrichtung (L1) parallel zu den Achsen des Vorder- und Hinterrads (4, 5) ist; und
Falten des Hauptrahmens (1) durch das erste Faltgelenk (2), um zu erreichen, dass das Vorder- und Hinterrad (4, 5) parallel zueinander sind.

6. Verfahren zum Falten eines klappbaren Fahrrads nach Anspruch 5, welches ferner den Schritt des Nach-unten-Knickens eines Lenkervorbaus (7) um eine Achse eines Faltwellenteils (64) eines zweiten Faltgelenks (6) umfasst durch Entriegeln des zwischen einem Vorderradträger (3) und dem Lenkervorbau (7) montierten zweiten Faltgelenks (6), wobei der Lenkervorbau (7) mit dem zweiten Faltgelenk (6) verbunden ist, das an einem oberen Ende des Vorderradträgers (3) schwenkbar gelagert ist.

7. Verfahren zum Falten eines klappbaren Fahrrads nach Anspruch 6, welches ferner den Schritt des Drehens des Vorderradträgers (3) um eine Achse einer Verbindung zwischen einem vorderen Ende des Hauptrahmens (1) und dem Vorderradträger (3) in einer Richtung im oder gegen den Uhrzeigersinn umfasst, um zu ermöglichen, dass der Vorderradträger (3) vor dem Schritt des Faltens des Hauptrahmens (1) von vorne nach hinten gerichtet ist.

8. Verfahren zum Falten eines klappbaren Fahrrads nach Anspruch 5, welches ferner den Schritt des Drehens des Vorderradträgers (3) um eine Achse einer Verbindung zwischen einem vorderen Ende des Hauptrahmens (1) und dem Vorderradträger (3) in einer Richtung im oder gegen den Uhrzeigersinn umfasst, um zu ermöglichen, dass der Vorderradträger (3) vor dem Schritt des Faltens des Hauptrahmens (1) von vorne nach hinten gerichtet ist.

## Revendications

1. Une bicyclette pliable, comprenant :
un cadre principal (1) présentant une première bielle (11) et une seconde bielle (12) ;
une première articulation pliante (2) entre la première bielle (11) et la seconde bielle (12) et présentant une première coque extérieure (21) connectée à une extrémité arrière de la première bielle (11), une seconde coque extérieure (22) connectée à une extrémité avant de la seconde bielle (12) pour connecter davantage la première coque extérieure (21), au moins un organe élastique (24) et un organe de verrouillage de came (26), dans laquelle la première coque extérieure (21) est formée par une première paroi latérale (211) et une première paroi annulaire (212) entourant une périphérie de la première paroi latérale (211) et présentant une première hauteur et une seconde hauteur, et la seconde coque extérieure (22) est formée par une seconde paroi latérale (221) et une seconde paroi annulaire (222) entourant une périphérie de la seconde paroi latérale (221) et présentant une première hauteur et une seconde hauteur, et dans laquelle la première hauteur de la première paroi annulaire (212) est connectée de manière correspondante à la seconde hauteur de la seconde paroi annulaire (222), et la seconde hauteur de la première paroi annulaire (212) se connecte de manière correspondante à la première hauteur de la seconde paroi annulaire (222), de manière à former en outre une jonction oblique (S1) entre les première et seconde parois annulaires (212, 222) ;
un support de roue avant (3) connecté à une extrémité avant de la première bielle (11) ;
une roue avant (4) connectée au support de roue avant (3) et agencée dans une seconde direction axiale (L1) parallèle à un axe de la roue avant (4) ;
une roue arrière (5) connectée à une extrémité arrière de la seconde bielle (12) et agencée dans la seconde direction axiale (L1) parallèle à un axe de la roue arrière (5), dans laquelle la seconde direction axiale (L1) est orientée obliquement par rapport à la première direction axiale (L2) à un angle inclus (*θ*) ; dans laquelle, après le déverrouillage de la première articulation pliante (2), la première articulation pliante (2) peut être tournée dans la première direction axiale (L2) en tant qu'axe de pliage ; dans laquelle, au cours du processus de pliage, la première coque extérieure (21) et la seconde coque extérieure (22) sont tournées le long de la jonction oblique (S1), et le cadre principal (1) est plié jusqu'à ce que la roue avant (4) et la roue arrière (5) soient agencées côte à côte ;
**caractérisée en ce que**
la première articulation pliante (2) inclut en outre une unité de mise en prise (23) logée dans un espace défini par la première coque extérieure (21) et la seconde coque extérieure (22) étant assemblées, le au moins un organe élastique (24) étant disposé entre l'unité de mise en prise (23) et la seconde coque extérieure (22), un bouton-poussoir (25) présentant un levier de poussée (251) à insérer d'un extérieur de la première coque extérieure (21) à un intérieur de la première coque extérieure (21) pour entrer en contact avec l'unité de mise en prise (23), et l'organe de verrouillage de came (26) étant configuré pour positionner la première coque extérieure (21), l'unité de mise en prise (23) et la seconde coque extérieure (22) toutes coaxiales les unes par rapport aux autres dans une première direction axiale (L2) et pour commander le resserrement entre la première coque extérieure (21) et la seconde coque extérieure (22) ;
dans laquelle l'unité de mise en prise (23) est disposée sur la jonction oblique (S1) pour entrer en prise avec la première coque extérieure (21) et la seconde coque extérieure (22) pour verrouiller la première articulation pliante (2) ;
dans laquelle, lorsque le bouton-poussoir (25) est enfoncé, son levier de poussée (251) pousse l'unité de mise en prise (23) à se déplacer vers la seconde coque extérieure (22) jusqu'à ce qu'elle soit détachée de la première coque extérieure (21).

2. La bicyclette pliable selon la revendication 1, dans laquelle une surface externe de la première coque extérieure (21) est dotée d'un réservoir à capacité (214) pour loger le bouton-poussoir (25) et d'une perforation (213) disposée dans le réservoir à capacité (214) pour l'insertion du levier de poussée (251) du bouton-poussoir (25).

3. La bicyclette pliable selon la revendication 2, dans laquelle une seconde articulation pliante (6) est fournie sur une extrémité supérieure du support de roue avant (3) et une tige de guidon (7) est en outre connectée à la seconde articulation pliante (6), de sorte que la tige de guidon (7) soit fléchie vers le bas pour s'appuyer contre un côté latéral du support de roue avant (3) en même temps que la seconde articulation pliante (6) reste dans un état de déverrouillage.

4. La bicyclette pliable selon la revendication 1, dans laquelle une seconde articulation pliante (6) est fournie sur une extrémité supérieure du support de roue avant (3) et une tige de guidon (7) est en outre connectée à la seconde articulation pliante (6), de sorte que la tige de guidon (7) soit fléchie vers le bas pour s'appuyer contre un côté latéral du support de roue avant (3) en même temps que la seconde articulation pliante (6) reste dans un état de déverrouillage.

5. Une procédé de pliage d'une bicyclette pliable selon la revendication 1, comprenant les étapes de :
déverrouillage d'une première articulation pliante (2) montée sur un cadre principal (1) entre une roue avant (4) et une roue arrière (5) ;
rotation de la première articulation pliante (2) dans une première direction axiale (L2) pour former un angle inclus (*θ*) entre la première direction axiale (L2) et une seconde direction axiale (L1) orientée obliquement par rapport à la première direction axiale (L2), dans lequel la seconde direction axiale (L1) est parallèle à des axes des roues avant et arrière (4, 5) ; et
pliage du cadre principal (1) par la première articulation pliante (2) pour rendre les roues avant et arrière (4, 5) parallèles l'une à l'autre.

6. La procédé de pliage d'une bicyclette pliable selon la revendication 5, comprenant en outre l'étape de fléchissement vers le bas d'une tige de guidon (7) autour d'un axe d'une partie d'arbre pliante (64) d'une seconde articulation pliante (6) en déverrouillant la seconde articulation pliante (6) montée entre un support de roue avant (3) et la tige de guidon (7), dans lequel la tige de guidon (7) est connectée à la seconde articulation pliante (6) pivotée sur une extrémité supérieure du support de roue avant (3).

7. La procédé de pliage d'une bicyclette pliable selon la revendication 6, comprenant en outre l'étape de rotation du support de roue avant (3) autour d'un axe de connexion entre une extrémité avant du cadre principal (1) et le support de roue avant (3) dans un sens horaire ou antihoraire pour permettre au support de roue avant (3) d'être orienté vers l'avant ou vers l'arrière avant l'étape de pliage du cadre principal (1).

8. La procédé de pliage d'une bicyclette pliable selon la revendication 5, comprenant en outre l'étape de rotation du support de roue avant (3) autour d'un axe de connexion entre une extrémité avant du cadre principal (1) et le support de roue avant (3) dans un sens horaire ou antihoraire pour permettre au support de roue avant (3) d'être orienté vers l'avant ou vers l'arrière avant l'étape de pliage du cadre principal (1).
